(19) Europäisches Patentamt
European Patent Office
Office européen des brevets

(11) **EP 3 074 786 B1**

(12) **FASCICULE DE BREVET EUROPEEN**

(45) Date de publication et mention de la délivrance du brevet:
**15.04.2020 Bulletin 2020/16**

(21) Numéro de dépôt: **14799380.2**

(22) Date de dépôt: **07.11.2014**

(51) Int Cl.:
*G01S 13/93* (2020.01)    *G01S 13/90* (2006.01)

(86) Numéro de dépôt international:
**PCT/EP2014/074056**

(87) Numéro de publication internationale:
**WO 2015/078682 (04.06.2015 Gazette 2015/22)**

(54) **RADAR ANTICOLLISION, NOTAMMENT POUR UN AÉRONEF AU ROULAGE, ET SYSTÈME ANTICOLLISION**

ANTIKOLLISIONSRADAR, INSBESONDERE FÜR EIN FLUGZEUG BEIM ROLLEN, UND KOLLISIONSSCHUTZSYSTEM

ANTICOLLISION RADAR, ESPECIALLY FOR AN AIRCRAFT WHEN TAXIING, AND ANTICOLLISION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.11.2013 FR 1302731**

(43) Date de publication de la demande:
**05.10.2016 Bulletin 2016/40**

(73) Titulaire: **THALES**
**92400 Courbevoie (FR)**

(72) Inventeurs:
• **CORNIC, Pascal**
  **F-29820 Guilers (FR)**

• **LE BIHAN, Patrick**
  **F-29870 Lannilis (FR)**
• **AUDIC, Yves**
  **F-29238 Brest Cedex 3 (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A2- 1 002 920    DE-A1- 10 310 214**
**FR-A1- 2 905 765    FR-A1- 2 913 775**
**US-A- 4 713 669    US-A1- 2012 169 532**

**Description**

La présente invention concerne un radar anticollision, notamment pour des aéronefs au roulage. L'invention concerne système anticollision utilisant au moins deux radars anticollision. Plus précisément, l'invention s'applique notamment pour la détection d'obstacles au sol afin d'éviter toute collision entre un aéronef au roulage et ces obstacles.

La densité du trafic aéroportuaire est de plus en plus importante tant dans les airs qu'au sol. Les collisions entre aéronefs et divers obstacles au sol sont de plus en plus fréquentes, notamment lorsqu'un aéronef rejoint une position de garage à partir d'une piste d'atterrissage d'un aéroport. Par exemple, sur un aéronef gros porteur les ailes et les réacteurs sont difficilement visibles par le pilote de l'aéronef. Les ailes et réacteurs sont donc particulièrement exposés aux chocs avec différents objets comme :

- d'autres aéronefs ;
- des installations aéroportuaires ;
- des véhicules techniques de l'aéroport.

Ce type d'incident, en plus des coûts de réparation de l'aéronef, entraîne un maintien au sol de l'aéronef. Ce maintien au sol de l'aéronef est pécuniairement préjudiciable à la compagnie possédant cet aéronef.

Pour pallier à ces problèmes de collision, les aéroports sont dotés de différents moyens permettant une gestion centralisée du trafic au sol. Ces moyens sont notamment des radars de surveillance aéroportuaires, des moyens radios, des GPS et des transpondeurs. Cependant la densité du trafic sur les aéroports est telle que ces moyens sont insuffisants pour assurer le guidage final des aéronefs vers leur position de garage. De plus ces moyens sont souvent inefficaces par temps de brouillard par exemple et de manière générale lorsque les conditions météorologiques sont mauvaises ou qu'il fait nuit. Une intervention humaine est alors nécessaire afin d'éviter à l'aéronef tout risque de collision avec des objets présents sur le sol dans une zone de roulage.

Une autre manière d'éviter des collisions entre un aéronef et des objets présents sur le sol est d'équiper l'aéronef de dispositifs anticollision autonomes et complémentaires des moyens existants sur l'aéroport. Ces dispositifs anticollision permettent notamment d'assurer la protection de l'aéronef sur une très courte distance vis à vis d'objets fixes ou possédant une faible vitesse de déplacement.

Parmi ces moyens, des dispositifs comportant des caméras sont notamment utilisés. Les caméras sont cependant inefficaces avec de mauvaises conditions météorologiques. De plus les dispositifs à base de caméras ne permettent au pilote de disposer d'informations précises ni sur la distance entre l'aéronef et un obstacle potentiel, ni sur la vitesse relative de l'aéronef par rapport à l'obstacle.

Pour traiter un large domaine angulaire avec une profondeur de champ suffisante en un temps très court, les caméras peuvent être équipées de zooms ou de dispositifs de pointages électroniques rapides. Les caméras ainsi équipées sont complexes à mettre en œuvre et ne possèdent pas la fiabilité nécessaire à un dispositif d'anticollision.

D'autres dispositifs à base de LIDAR, signifiant Light Détection And Ranging en langage anglo-saxon, peuvent être utilisés. Les dispositifs d'anticollision utilisant des LIDAR ont cependant les mêmes inconvénients que les dispositifs utilisant des caméras.

Des senseurs acoustiques peuvent également être mis en œuvre dans des dispositifs d'anticollision. Les senseurs acoustiques sont cependant très sensibles aux brouillages et aux perturbations dans la propagation des ondes acoustiques. Tout ceci rend l'emploi de senseurs acoustiques difficile dans un environnement aéroportuaire. La portée des senseurs acoustiques est également trop faible, de l'ordre de quelques mètres, pour convenir à un dispositif d'anticollision.

D'autres dispositifs d'anticollision utilisent des technologies radar comme des radars ultra large bande. Ces dispositifs risquent de brouiller d'autres équipements comme les équipements de navigation embarqués à bord des aéronefs. Les radars ultra large bande sont donc soumis, lorsque leur utilisation est autorisée, à une réglementation très restrictive limitant notamment la puissance de l'onde émise. La limitation de la puissance d'émission de ces radars réduit considérablement leur domaine d'utilisation et notamment leur portée. De plus, ces radars ne possèdent pas, pris individuellement, de capacité de discrimination angulaire. Ils ne permettent donc pas une localisation suffisamment précise des obstacles. De tels radars possèdent des capacités de discrimination angulaire intéressantes uniquement lorsqu'ils sont regroupés en réseau de grande dimension, ce qui est impossible à mettre en œuvre à bord d'un aéronef.

La demande de brevet FR 07 01927 décrit une solution efficace pour traiter le risque de collision, dans laquelle un système de capteurs radars automobiles fonctionnant dans la bande millimétrique est utilisé.

Cette solution, bien qu'efficace, peut se trouver confrontée compte tenu du nombre de capteurs mis en œuvre et à leur position d'installation, à des contraintes à la fois de coût et d'intégration qui rendent difficile sa mise en œuvre sur certains porteurs.

Un but de l'invention est notamment de pallier les inconvénients précités. A cet effet, l'invention a pour objet un radar anticollision pour aéronef au roulage, ledit radar étant apte être fixé latéralement sur le corps d'un aéronef et à réaliser la détection d'obstacles en trajectoire de collision avec une partie de l'aéronef en regard dudit radar, il comporte au moins une voie antennaire d'émission émettant une onde du type FMCW et plusieurs voies antennaires de réception disposées dans un même plan, la forme de ladite onde et le domaine de couverture angulaire dudit radar étant fonction de la vitesse de l'aéronef, les moyens de traitement dudit radar effectuant au moins les étapes suivantes :

- Etablissement dans le repère du radar d'une première carte distance/Doppler permettant de séparer les échos selon des cellules de résolution distance et Doppler sur lesdites plusieurs voies antennaires de réception ;
- Etablissement d'une seconde carte distance/Doppler de dimensions réduites par rapport à la première, en sélectionnant dans cette dernière un sous-ensemble de cellules de résolution distance et Doppler correspondant aux positions possibles de cibles susceptibles d'entrer en collision avec ladite partie l'aéronef, ladite sélection étant fonction de la vitesse de l'aéronef ;
- Etablissement de nouvelles cartes distance/Doppler par formation de faisceau par le calcul sur les sous-ensembles de cellules de résolution distance retenues sur chaque voie antennaire de réception, de façon à séparer le faisceau d'observation angulaire dans le plan des voies antennaires en au moins deux faisceaux, conformément au principe d'affinage de lobe par filtrage Doppler selon un traitement d'antenne synthétique non focalisé ;
- Intégration temporelle, sur chaque faisceau formé, de plusieurs cartes distance/Doppler successives obtenues dans l'étape précédente afin d'obtenir une carte distance/Doppler finale pour chaque faisceau, la durée d'intégration étant fonction de la forme d'onde utilisée ;

ces étapes étant suivies au moins d'une étape de détection dans chacun des faisceaux formés à partir de ladite carte distance/Doppler finale.

Dans l'étape de détection, l'estimation de l'angle d'azimut de ladite cible est par exemple effectuée, pour chaque pixel détecté dans la carte distance/Doppler finale, en comparant le niveau reçu sur les cartes distance/Doppler de deux faisceaux formés adjacents selon un opérateur de type monopulse d'amplitude.

L'étape de détection est par exemple suivie d'une étape de pistage des cibles détectées dans le repère dudit radar.

Le radar effectue par exemple une étape de changement de repère géographique, passant du repère lié au radar à un repère lié à ladite partie du radar, pour estimer les coordonnées des cibles dans le repère lié à ladite partie.

Le plan des voies antennaires de réception est par exemple horizontal.

La formation de faisceau peut être effectuée sur un domaine angulaire de +/- 45° dans le plan des voies antennaires, par rapport à un axe de visée, apte à être perpendiculaire à l'axe du corps de l'aéronef.

Dans un mode de réalisation possible, les antennes des voies antennaires de réceptions sur lesquels est effectuée la formation de faisceaux par le calcul sont espacées l'une de l'autre de plus d'une demie longueur d'onde, l'ambiguïté de position angulaire d'une cible étant levée par la fréquence Doppler de la cellule distance/Doppler de ladite cible.

La première carte distance/Doppler est par exemple obtenue après compression en distance et compression en Doppler de ladite onde du type FMCW.

Dans un mode de réalisation particulier, le système de réception du radar comporte quatre voies antennaires.

Le radar fonctionne par exemple dans le domaine millimétrique. Dans un mode de réalisation particulier, il fonctionne dans la bande de fréquence 76 à 77 GHz.

Ladite partie est par exemple une extrémité d'aile de l'aéronef

L'invention a également pour objet un système anticollision pour avion au roulage, ledit système comportant au moins deux radars tels que celui décrit précédemment, installés latéralement chacun d'un côté du fuselage.

Dans un mode de réalisation possible, chaque radar est installé en avant de l'aile, fixé par exemple à l'emplacement d'un hublot au voisinage du cockpit.

D'autres caractéristiques et avantages de l'invention apparaîtront à l'aide de la description qui suit, faite en regard de dessins annexés qui représentent :

- la figure 1, un exemple de système anticollision selon l'invention appliqué à un aéronef au roulage par une vue de dessus ;
- la figure 2, le système précédent par une vue depuis l'avant de l'aéronef ;
- la figure 3, le schéma de principe d'un exemple de radar selon l'invention au niveau des voies d'émission et de réception ;
- la figure 4, un exemple de quatre formes d'onde utilisées par un radar selon l'invention en fonction de la vitesse du porteur ;
- la figure 5, les étapes possibles mise en œuvre par le traitement d'un radar selon l'invention ;
- la figure 6, l'établissement d'une première carte distance/Doppler ;
- la figure 7, une illustration de la résolution Doppler ;

- la figure 8, l'établissement d'une seconde carte distance/Doppler de dimension réduite par rapport à la première ;
- les figures 9a et 9b, des illustrations de domaines de détection ;
- les figures 10a et 10b, des exemples de formations de faisceaux ;
- la figure 11, une illustration d'une étape d'intégration d'une carte distance/Doppler ;
- la figure 12, une illustration d'une étape de détection et d'estimation de position et de vitesse de cible ;
- la figure 13, une illustration du passage d'un repère lié à un radar à un repère lié à l'extrémité d'une aile d'avion.

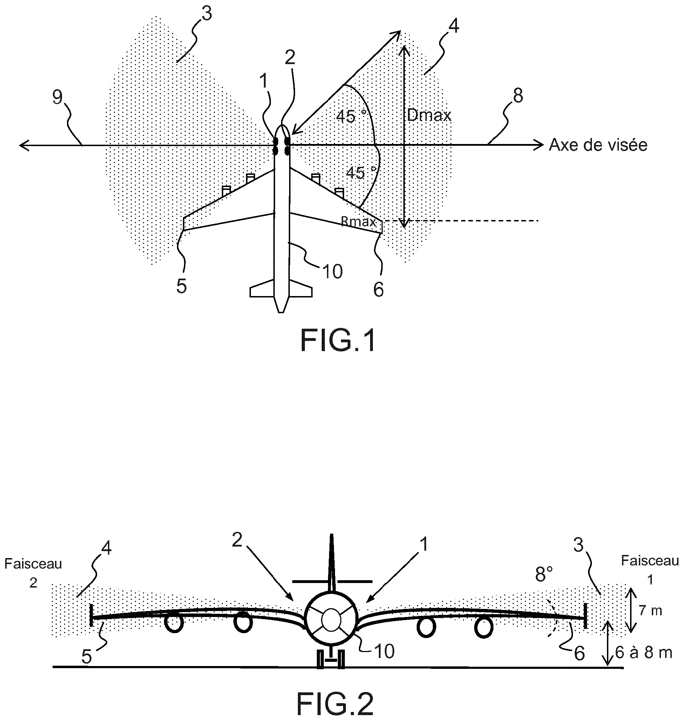

La figure 1 illustre un exemple de système d'anticollision selon l'invention, installé sur un avion de ligne. Ce système permet notamment d'éviter les chocs sur l'extrémité des ailes et éventuellement sur les réacteurs.

Le système est composé de deux capteurs 1, 2 selon l'invention, de type radar, installés latéralement chacun d'un côté du fuselage de l'avion 10. Les radars 1, 2 sont orientés selon un axe de visée 8, 9 sensiblement perpendiculaire à l'axe du fuselage de façon à ce que leurs faisceaux 3, 4 couvrent les zones situées en avant de l'aile. Chaque radar est par exemple placé au voisinage du cockpit de façon à détecter les obstacles en trajectoire de collision avec l'extrémité de l'aile 5, 6. Il peut notamment être installé dans l'emplacement d'un hublot. Le traitement selon l'invention qui sera décrit par la suite permet avantageusement d'éviter le placement des radars sur les extrémités des ailes. Ce même traitement permet de limiter l'installation d'un seul radar par côté du fuselage. Chaque radar est autonome et délivre par exemple des informations d'alerte directement au pilote, sans nécessité de fusionner l'information de plusieurs radars.

Le domaine de couverture des radars est optimisé pour assurer la détection d'obstacles le plus loin possible et de façon continue jusqu'au plus près possible de l'extrémité de l'aile. Ainsi, un radar 1, 2 possède un champ large en azimut, par exemple de l'ordre de 90°. Plus particulièrement, compte-tenu d'une part de la géométrie d'installation et d'autre part de l'ouverture angulaire maximum atteignable pour une antenne radar fixe, la couverture angulaire du radar dans le plan horizontal s'étend par exemple de +/- 45° selon l'axe de visée 8, 9. Dans ces conditions, la protection de l'extrémité de l'aile est assurée à partir d'une distance nulle jusqu'à une distance maximum Dmax, typiquement de l'ordre de 90 mètres, correspondant à la portée radar Rmax de l'ordre de 70 mètres. Compte tenu des distances de freinage nécessaires pour arriver à l'arrêt du porteur, le système anticollision doit par exemple être efficace jusqu'à une vitesse de l'ordre de 10 mètres/seconde.

La figure 2 présente les faisceaux radars 3, 4 en élévation. Dans le plan vertical, l'ouverture angulaire de l'antenne d'un radar 1, 2 et la direction de son faisceau sont choisies pour éclairer largement l'extrémité de l'aile tout en réduisant l'illumination du sol. Typiquement, pour une distance entre le radar et l'extrémité de l'aile de l'ordre de 50 mètres, un faisceau d'ouverture d'environ 8° en élévation pointé dans la direction de l'extrémité de l'aile permet d'obtenir une couverture verticale de +/- 3,5 mètres centrée sur l'extrémité de l'aile, ce qui est un bon compromis pour des avions de grande dimension dont l'extrémité des ailes est située à une hauteur comprise entre 6 et 8 mètres du sol.

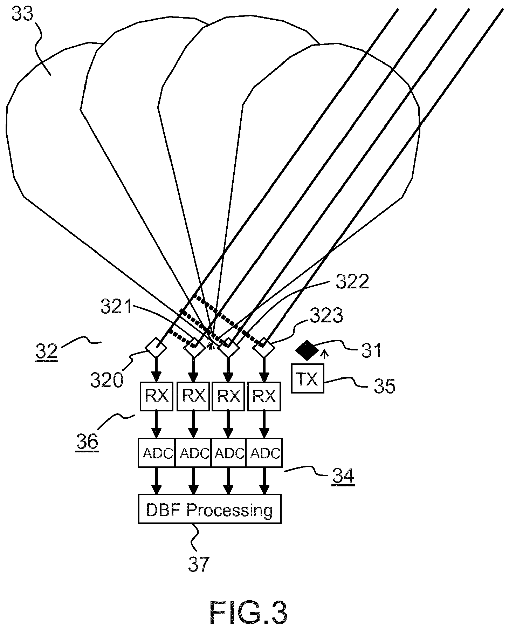

La figure 3 présente le schéma de principe d'un radar 1, 2 d'anticollision selon l'invention. Le radar utilisé peut être avantageusement un radar du type de celui décrit dans la demande de brevet EP 0863409, fonctionnant par exemple à 77 GHz.

Le radar dispose d'au moins une voie antennaire d'émission 31 et plusieurs voies antennaires de réception 32 répartie de préférence dans un même plan, horizontal. Dans un mode de réalisation possible, le radar comporte une voie d'émission et quatre voies antennaires 320, 321, 322, 323 comme illustré par la figure 3. Ainsi le radar comporte un émetteur 35 et quatre récepteurs 36. Chaque voie de réception comporte un convertisseur analogique numérique 34, les signaux reçus numérisés sont envoyés vers un calculateur 37 effectuant la formation de faisceau par le calcul. L'antenne, regroupant les voies antennaires d'émission 31 et réception 32, peut être de type circuit imprimé. L'antenne est réalisée de telle sorte qu'elle couvre un champ large dans le plan horizontal, par exemple 90° et un champ étroit dans le plan vertical, par exemple 8°.

Le radar telle qu'illustré par la figure 3 est capable de former par traitement quatre faisceaux adjacents, se chevauchant en partie, ayant chacun une ouverture de l'ordre de 30° dans le plan horizontal. Cet exemple correspond typiquement à une situation où les antennes de réception sont séparées dans le plan horizontal d'un espace correspondant à une demie longueur d'onde, et où quatre faisceaux de l'ordre de 30° d'ouverture sont formés tous les 30°, l'ensemble du domaine de réception couvrant environ environ 120°.

Le radar utilise une forme d'onde de type FMCW (onde continue à modulation de fréquence) dont les caractéristiques sont adaptées au besoin de l'application avion, relativement à la résolution nécessaire. De façon à optimiser à la fois la fonction d'ambiguïté du radar et le rapport signal sur bruit aux différentes hypothèses de collision, le traitement adapte la forme d'onde à la vitesse courante du porteur.

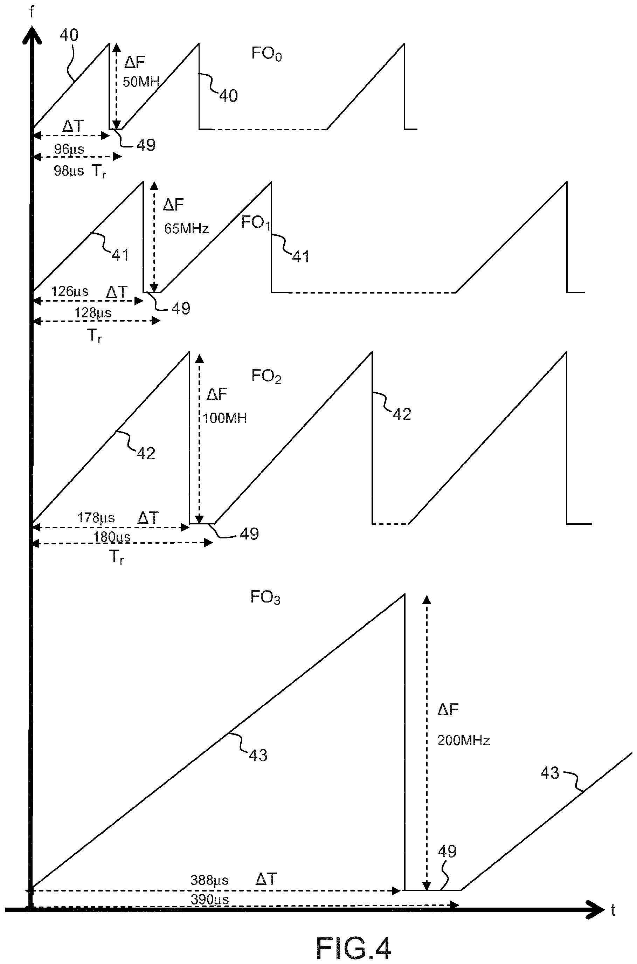

La figure 4 illustre un exemple de réalisation où quatre formes d'ondes $FO_0$, $FO_1$, $FO_2$ et $FO_3$ représentées par des courbes 40, 41, 42, 43. Chaque courbe exprime la variation linéaire de fréquence en fonction du temps t selon une période de récurrence Tr différente pour chacune des formes d'onde, une durée de repos 49 pendant laquelle la fréquence est nulle étant prévue entre chaque variation, notamment pour stabiliser la boucle de réception. La période Tr est égale à la durée de la rampe de la forme d'onde augmentée du temps de repos 49. De même l'amplitude de modulation de la rampe ΔF varie d'une forme d'onde à l'autre.

Selon l'invention, la forme d'onde du radar est asservie sur l'une de ces formes $FO_0$, $FO_1$, $FO_2$, $FO_3$ en fonction de la vitesse du porteur. Plus particulièrement, les caractéristiques de la forme d'onde sont fonction de la vitesse du porteur, ces caractéristiques étant essentiellement la durée de la rampe $\Delta T$ et la bande de modulation $\Delta F$. Un exemple de quatre formes d'ondes $FO_0$, $FO_1$, $FO_2$, $FO_3$ est présentés en annexe.

A charge de traitement constante, il est avantageux à vitesse élevée, là où une détection à distance lointaine est recherchée, de privilégier la résolution Doppler du radar au détriment de la résolution distance. Au contraire, à faible vitesse il est préférable d'utiliser une forte résolution distance, la séparation par vitesse étant peu discriminante. Cet aspect sera décrit par la suite en regard des traitements effectués sur le signal reçu par le radar.

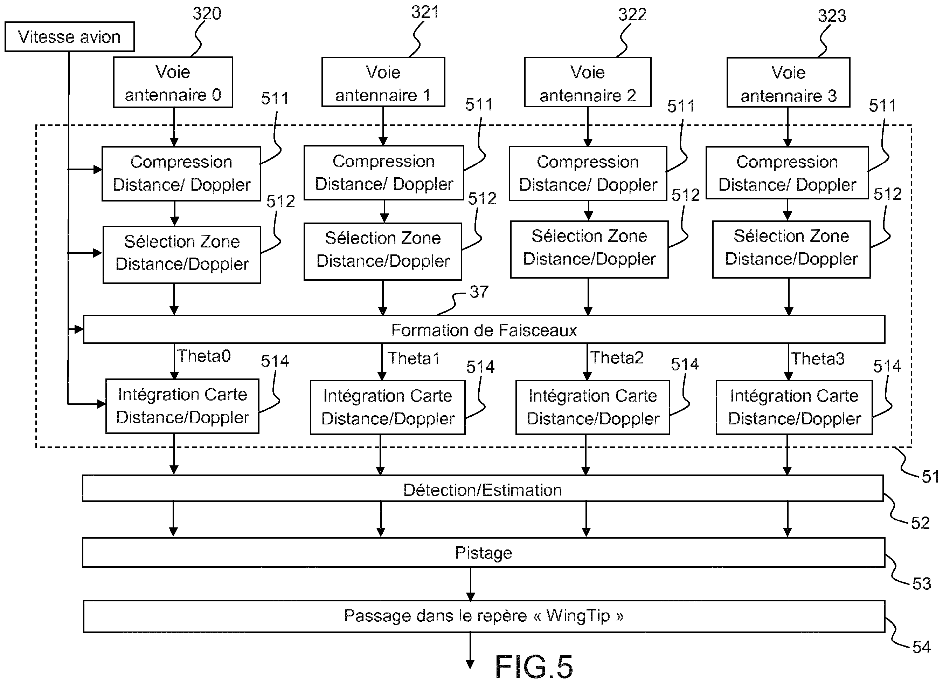

La figure 5 illustre les étapes du traitement effectuées par un radar selon l'invention dans le cas d'un mode de réalisation à quatre voies de réception.

Dans une première phase 51, le traitement décompose l'environnement vu par chacune des voies antennaires de réception 320, 321, 322, 323 suivant deux axes, un axe distance et un axe Doppler, pour former une première carte des signaux reçus codés en amplitude et phase. A l'issue de cette première phase, le radar effectue une étape détection et la localisation 52, puis une étape de pistage 53 et enfin une étape 54 passage dans un repère lié à l'extrémité de l'aile.

Dans la première phase 51, le radar effectue pour chaque voie antennaire, une étape 511 de compression en distance et en Doppler, une étape 512 de sélection d'une zone distance-Doppler, une étape 37 de formation de faisceau par le calcul puis une étape 514 d'intégration de la carte distance-Doppler.

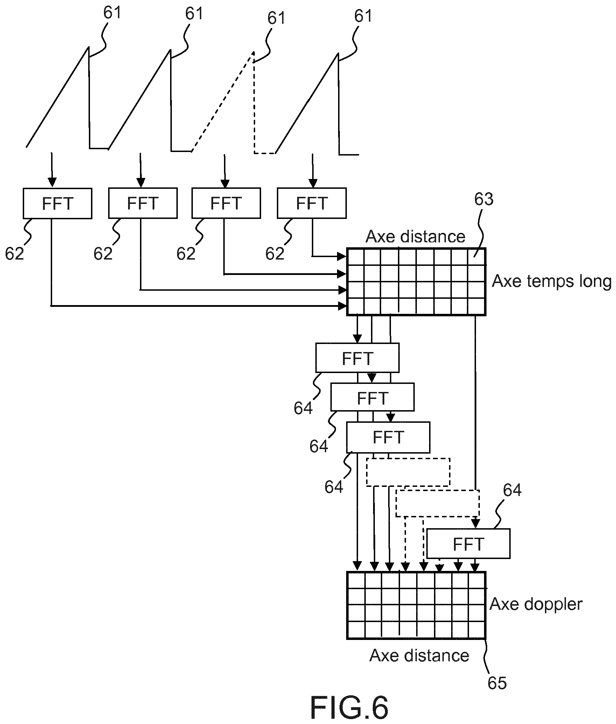

La figure 6 illustre la compression en distance et en Doppler 511. Cette étape permet d'établir dans le repère du radar une carte distance/Doppler permettant de séparer les échos selon des cellules de résolution distance et Doppler sur les voies antennaires de réceptions réparties dans le plan horizontal.

La compression s'effectue après démodulation du signal reçu par le signal d'émission et codage. Elle comporte elle-même deux étapes. La première étape consiste à effectuer la compression distance par transformée de Fourier rapide 62 (FFT) sur une profondeur temporelle $NFF_{CD}$ correspondant à la durée de modulation de chacune des rampes de fréquence 61. Dans chaque case distance 63 on obtient une valeur de distance biaisée par l'effet Doppler. Les FFT distance de cette première étape sont donc suivies dans une seconde étape de FFT Doppler pour corriger ce biais.

La seconde étape permet donc d'analyser le signal reçu dans chacune des cases distance 63 ainsi formées en réalisant une seconde transformée de Fourrier rapide 64 sur une profondeur temporelle correspondant à un nombre $NFFT_{Dop}$ de rampes successives. A l'issue de cette seconde étape, on obtient sur chaque antenne de réception une carte distance-Doppler 65 de dimension $NFF_{CD}$ x $NFFT_{Dop}$. Le traitement angulaire distance et le traitement Doppler peuvent être inversés, c'est-à-dire que l'on peut commencer par effectuer les FFT Doppler et ensuite les FFT distance.

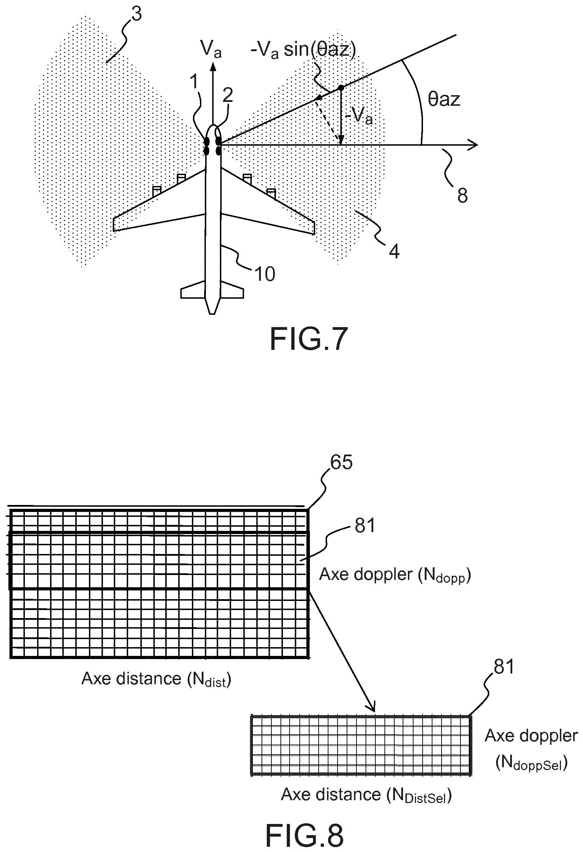

La séparation des cibles sur l'axe Doppler est utilisée pour séparer les signaux selon leur direction d'arrivée, conformément au principe d'affinage de lobe par filtrage Doppler selon un traitement d'antenne synthétique non focalisé. En effet, chacune des colonnes de cette matrice distance-Doppler 65 peut être assimilée pour les échos fixes à un sous-faisceau dans une direction donnée en azimut. La figure 7 illustre cette résolution Doppler.

Comme le montre la figure 7, à condition de pouvoir négliger l'angle d'élévation, ce qui est le cas dans cette application à un avion en phase de roulage, la vitesse radiale Vr d'un point fixe situé à l'azimut $\theta_{az}$ par rapport à l'axe du faisceau s'écrit :

$$Vr = -Va\, \sin(\theta_{az}) \qquad (1)$$

Où Va est la vitesse longitudinale de l'avion au roulage Et par suite, sa fréquence Doppler s'écrit :

$$Fd = -2\frac{Va}{\lambda}\sin(\theta_{az}) \qquad (2)$$

Où $\lambda$ représente la longueur d'onde

Deux points fixes séparés angulairement d'un écart angulaire $\Delta\theta az$ génèrent deux fréquences Doppler séparées de :

$$\Delta Fd = 2\frac{Va}{\lambda}\cos(\theta_{az})\,\Delta\theta_{az} \qquad (3)$$

Ainsi, si la durée d'observation utilisée pour le calcul de la transformée de Fourrier Doppler est Te=1/$\Delta$Fd.

Chaque colonne de la matrice distance Doppler 65 correspond à la sortie d'un sous faisceau de largeur typiquement

$$\Delta\theta az = \frac{\lambda}{2\,Va\,Te\cos(\theta_{az})} \qquad\qquad (4)$$

$$\theta_{az} = \arcsin(-\frac{\lambda Fd}{2Va}),$$

centré sur l'angle d'azimut $\qquad$ où Fd est la fréquence centrale du filtre considéré

Si l'on considère un point fixe situé à la distance R et à l'azimut $\theta_{az}$ du radar, la transformée de Fourrier sur l'axe Doppler permet d'apporter une résolution en distance transverse :

$$r_t = \frac{\lambda R}{2\,Va\,Te\cos(\theta_{az})} \qquad\qquad (5)$$

par exemple, pour :

$\lambda$=3,9 mm
R=40 m
Va=10 m/sec
Te=50 ms
$\Theta$az=0

On obtient une résolution transverse $r_t$=15,6 cm

Dans le choix de la forme d'onde décrit précédemment, l'invention utilise avantageusement le fait que la résolution angulaire, qui se traduit par une résolution en distance transverse vue du radar, est inversement proportionnelle à la vitesse du porteur.

Dans le cas où la cible observée est animée d'une vitesse radiale Vro par rapport au radar, la séparation angulaire par filtrage Doppler est inchangée, mais à cause de l'ambiguïté angle/vitesse, l'estimation directe de l'angle à partir de la mesure de la fréquence Doppler est biaisée car on obtient :

$$Fd = -2\frac{Va}{\lambda}\sin(\theta_{az}) + 2\frac{Vro}{\lambda} \qquad\qquad (6)$$

et

$$\theta_{azestimé} = \arcsin(-\frac{\lambda Fd}{2Va} + \frac{Vro}{Va}) \qquad\qquad (7)$$

Où $\theta_{azestimé}$ est l'estimation de l'angle d'azimut obtenue directement à partir de la mesure de la fréquence Doppler Fd.

La compression Doppler a donc pour objectif principal de procurer au radar de la résolution transverse, la résolution radiale étant obtenue par la largeur de bande émise.

La localisation angulaire doit quant à elle être affinée par un moyen complémentaire, dès lors que la détection s'intéresse à la fois aux cibles fixes et aux cibles mobiles. Cela s'effectue par la sélection d'une zone distance-Doppler.

La figure 8 illustre la sélection d'une zone distance-Doppler 512. Dans cette étape le radar établit une seconde carte de dimensions réduites par rapport à la première en sélectionnant dans celle-ci un sous ensemble de cellules de résolution distance et Doppler correspondant aux positions possibles d'éventuels obstacles susceptibles d'entrer en collision avec l'extrémité de l'aile.

Comme indiqué précédemment, de façon à profiter du pouvoir discriminateur angulaire de l'axe Doppler pour privilégier certaines zones angulaires ainsi qu'à limiter la puissance de calcul, une sélection d'une zone distance-Doppler d'intérêt 81 est réalisée dans cette étape 512. Pour sélectionner cette zone, le traitement prend en compte la vitesse courante du porteur sur une zone distance-Doppler d'intérêt, ce qui correspond, vu du radar, à une fauchée en distance et à un domaine angulaires limités. Des exemples de critères de sélection sont décrits ci-après.

- Seuls les obstacles situés par rapport au fuselage à une distance latérale voisine de la distance de l'extrémité de l'aile sont susceptibles de générer une collision, et doivent être pris en considération.

Par exemple, on peut considérer que l'extension de la zone de danger s'étend de plus ou moins 10 mètres de part et d'autre de l'extrémité de l'aile. Ce critère permet de délimiter une fauchée radar minimum limitant la zone de traitement sur l'axe distance radiale, vue du radar.

• D'autre part, compte tenu des temps de réaction et distance de freinage, la distance de détection longitudinale minimum par rapport à l'extrémité de l'aile pour un premier niveau d'alerte est fonction de la vitesse du porteur. Par ailleurs, le traitement radar nécessite un nombre de détections successives minimum pour déclarer la présence d'un obstacle de façon fiable avec un risque très faible de fausse alarme. Ces deux contraintes permettent de déterminer la limite en distance supérieure de la zone de détection, vue de l'extrémité de l'aile. Cette limite est par exemple de l'ordre de 75 m pour une vitesse Va de 10 m/sec, et de l'ordre de 20 m pour vitesse Va de 2,5 m/s. Elle permet de déterminer la première limite du domaine angulaire minimum de détection dans le plan horizontal, vu du radar.

• Enfin, il est nécessaire de maintenir un suivi de la position de l'obstacle jusqu'à une distance minimum correspondant à la distance de freinage, afin de vérifier que celui-ci reste en trajectoire de collision. Cette contrainte permet de déterminer la limite en distance inférieure de la zone de détection, vue de l'extrémité de l'aile.
Cette limite est typiquement de 55 m à 10 m/sec et de 10 m à 2,5 m/sec. Elle permet de déterminer la seconde limite du domaine angulaire minimum de détection dans le plan horizontal, vu du radar.

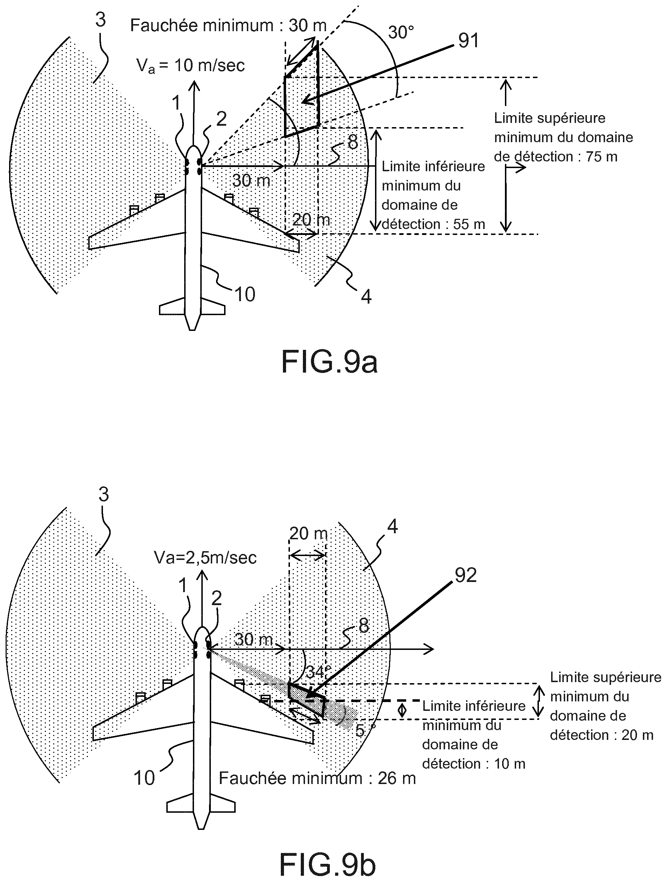

Les figures 9a et 9b illustrent à titre d'exemple des domaines de surveillance minimum correspondant aux critères exposés ci-dessus, pour une détection limitée aux obstacles fixes. Ces figures représentent deux situations opposées, la figure 9a correspondant à une vitesse Va maximum de 10 m/s et la figure 9b à une vitesse minimum de 2,5 m/s. Dans l'exemple de la figure 9a, le domaine de détection minimum 91 couvre un domaine angulaire de 30° avec une fauchée minimum de 30 mètres, orienté d'environ +45° par rapport à l'axe de visée 8 et s'étendant sur 10 mètres de part et d'autre de l'extrémité de l'aile. La limite inférieure minimum du domaine de détection est de 55 mètres et la limite supérieure est de 75 mètres. Dans l'exemple de la figure 9b, le domaine de détection minimum 92 couvre un domaine angulaire de 5° avec une fauchée minimum de 26 mètres, orienté d'environ -35° par rapport à l'axe de visée 8 et s'étendant sur 10 mètres de part et d'autre de l'extrémité de l'aile. La limite inférieure minimum du domaine de détection est de 10 mètres et la limite supérieure est de 20 mètres. Ces valeurs indiquées relativement aux figures 9a et 9b sont données à titre indicatif et d'exemple et peuvent être optimisées en fonction du porteur et des scénarios de collision envisagés.

A ces domaines de détection, définis par des limites en distance et en angle d'azimut, correspond directement pour les obstacles fixes, un domaine limité en distance et en Doppler sur la carte distance-Doppler. Cependant si la détection des obstacles mobiles est requise, il est nécessaire d'élargir le domaine Doppler pour tenir compte de la contribution apportée par la vitesse radiale propre à ces obstacles, conformément à la relation (6). Par ailleurs, si la détection de mobiles s'insérant de façon tardive dans le champ de vision du radar est envisagée, il est également nécessaire d'augmenter angulairement les limites du domaine de détection. Ainsi, selon l'invention, les limites du domaine Doppler sont établies en fonction de la vitesse du porteur 10, par exemple selon le tableau ci-dessous.

| Vitesse du porteur | Limites du domaine angulaire par rapport à l'axe de visée 8 | Domaine vitesse à considérer | Domaine Doppler à considérer |
|---|---|---|---|
| 7,5 à 10 m/s | 0° à 45° | -10 m/s à 0 m/s | -4 KHz à 0 KHz |
| 5 à 7,5 m/s | -35° à 45° | -10 m/s à 4,3 m/s | -3 KHz à 2,1 KHz |
| 2,5 à 5 m/s | -45° à 10° | -5,4 m/s à 3,5 m/s | -2,1 KHz à 1,7 KHz |
| 0 à 2,5 m/s | -45° à 0° | -5,4 m/s à 1,8 m/s | -2 KHz à 0,9 KHz |

Les limites du domaine de distance s'étendent de 30 mètres à 70 mètres, quelle que soit la vitesse du porteur 10.

L'étape suivante 37 est l'étape de formation de faisceaux en azimut. Dans cette étape, le radar établit donc de nouvelles cartes distance/Doppler par formation de faisceau par le calcul sur les sous-ensembles de cellules de résolution distance retenues sur chaque voie antennaire, de façon à séparer le faisceau d'observation angulaire dans le plan horizontal en plusieurs sous-faisceaux, au moins deux.

Les traitements des étapes précédentes 511, 512 sont réalisés de façon indépendante sur chacune des quatre voies de réception, jusqu'à cette étape de formation de faisceaux par le calcul. Dans cette étape les moyens de traitement du radar focalisent, par intégration cohérente en réception, le faisceau radar dans plusieurs directions différentes sur les cartes distance-Doppler précédemment construites, une carte correspondant à chaque voie de réception. Cette opération peut être réalisée par l'opérateur définie par la relation (8) suivante sur chacun des pixels (i, j) des cartes distances-Doppler d'entrée :

$$S_{i,j}(\theta) = \sum_{k=0}^{N_{ant}-1} s(i,j) e^{2j\pi\frac{\delta d}{\lambda}k\sin\theta\, az} \qquad (8)$$

Avec :

$N_{ant}$ : Le nombre d'antennes de réception
$\delta d$ : La distance entre chaque paire d'antennes élémentaires
$\lambda$ : La longueur d'onde
$\theta_{az}$ : La direction dans laquelle est formé le faisceau
i, j : Les indices des pixels suivant les axes Doppler (i) et distance (j)
s(i, j) : Le signal en amplitude et phase dans la case distance/Doppler i, j.

Par exemple, dans l'exemple de réalisation à 4 voies de réception, on peut former typiquement les faisceaux dans les directions : $\theta_{az}$=+45°, $\theta_{az}$=+15°, $\theta_{az}$=-15° et $\theta_{az}$=+45°, à partir des quatre cartes distances Doppler. Ce traitement délivre ainsi quatre cartes distance/Doppler 81 de dimension ($N_{doppSel}$, $N_{distSel}$) dans chacune des directions précitées.

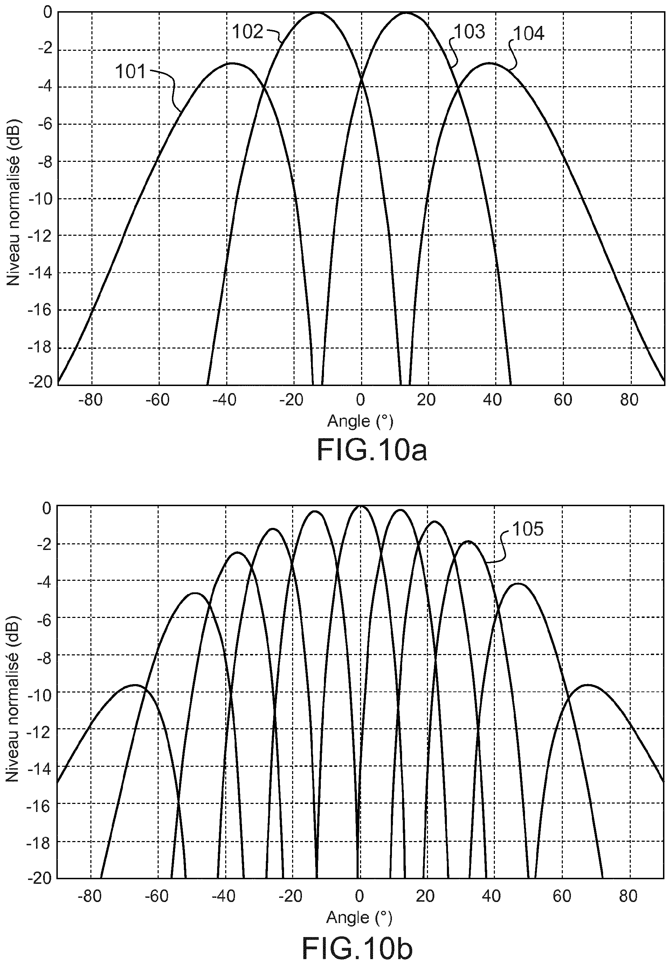

Les figures 10a et 10b illustrent des exemples des formations de faisceaux. La figure 10a correspond à un mode de réalisation à quatre voies de réception où l'écartement entre chaque antenne de réception dans le plan horizontal est de $\lambda$/2. Dans ce cas, quatre faisceaux 101, 102, 103, 104 sont formés avec une largeur d'environ 30° et ne présentent pas d'ambiguïté. Il est à noter que le diagramme des antennes élémentaires de réception tend à dépointer les faisceaux formés. En effet, le diagramme résultant est défini par la directivité du réseau pondérée par le diagramme élémentaire déterminé par l'ouverture des sous-réseaux élémentaires. Ce biais étant prédictible, il est possible soit de prendre cet effet en considération dès la formation des faisceaux pour les positionner correctement, soit de compenser ces biais a posteriori lors de l'estimation angulaire des objets détectés.

Grâce au traitement effectué par un radar selon l'invention, il est également possible d'améliorer la résolution des faisceaux de réception y compris aux forts dépointages, en espaçant les antennes de réception d'un écartement supérieur à $\lambda$/2, ce qui n'est pas possible habituellement du fait de la présence de lobes d'ambiguïtés qui tendent à faire apparaître aux forts dépointages des détections situées sur le secteur opposé leur position réelle par rapport à l'axe de l'antenne. Cette situation est présentée sur la figure 10b où il apparaît 11 faisceaux 105. En effet, pour un obstacle en trajectoire de collision avec l'aile de l'avion, le signe de la vitesse correspondant à un rapprochement ou à un éloignement vis-à-vis du radar permet sans ambiguïté de localiser la détection du côté gauche ou du côté droit relativement à l'axe de l'antenne. Pour tout obstacle en trajectoire de collision, le signe de la fréquence Doppler permet donc de lever l'ambiguïté gauche/droite qui pourrait être générée par un diagramme d'antenne ambigu.

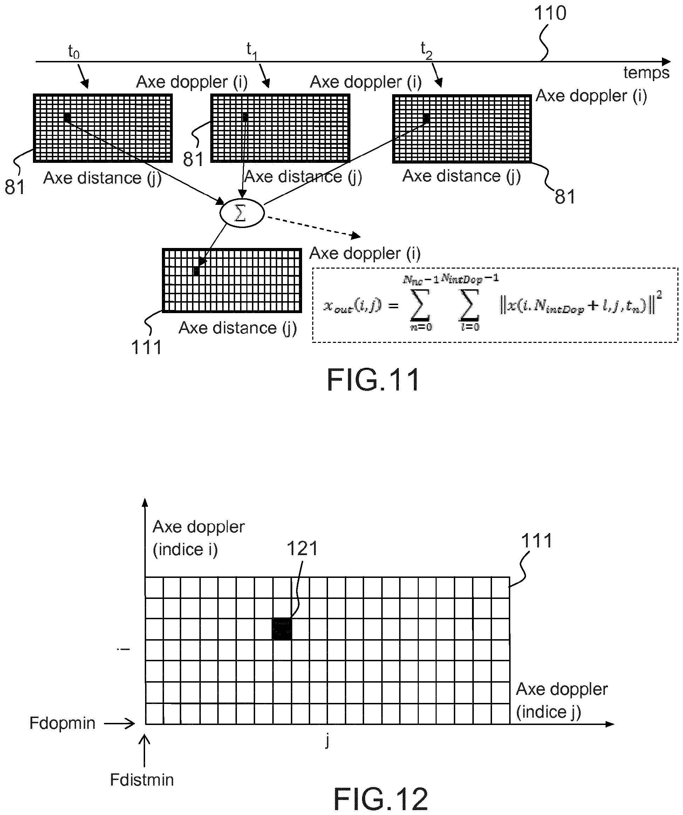

La figure 11 illustre l'étape d'intégration de la carte distance-Doppler. Plus particulièrement, cette étape 514 effectue l'intégration temporelle de plusieurs cartes distance/Doppler successives obtenues sur chaque faisceau formé dans l'étape précédente, adaptée aux cibles en trajectoire de collision. Un objectif de cette étape 514 est notamment d'accroître le rapport signal sur bruit par intégration temporelle non cohérente des images distance-Doppler issues de l'étape précédente, c'est-à-dire dans chacune des directions de visée. Plus particulièrement, la figure 11 illustre le principe d'intégration non cohérente des cartes distance-Doppler.

L'intégration est réalisée sur les deux axes, Doppler et distance de chaque carte 81, en tenant compte pendant le temps d'intégration, des migrations possibles en distance et en Doppler, en limitant l'intégration aux déplacements temporels de pixels pouvant correspondre à des trajectoires de collision :

- Sur l'axe Doppler : Chaque pixel (i, j) de sortie est obtenu par intégration non cohérente de $N_{intDopp}$ pixels Doppler situés dans une même case distance de la carte d'entrée, où $N_{intDopp}$ est choisi en fonction de la migration Doppler maximum pendant le temps d'intégration. En d'autres termes, on fixe un temps d'intégration et on observe de combien de filtres peut se déplacer la cible Doppler.
  Il est par ailleurs également possible à ce niveau de limiter l'intégration aux seuls pixels qui présentent un rapport signal à bruit prédéfini et jugé suffisant pour correspondre à une présomption de présence d'un signal utile.
- Sur l'axe Temporel : Tous les pixels des cartes distance/Doppler issus de l'étape précédente sont sommés de façon non cohérente sur une profondeur temporelle définie par un paramètre $N_{NC}$.
  Cette sommation peut s'effectuer de façon glissante ou non.

Un pixel $x_{out}(i, j)$ en sortie est ainsi obtenu par intégration non cohérente selon la relation (9) suivante :

$$x_{out}(i,j) = \sum_{n=0}^{N_{nc}-1} \sum_{l=0}^{N_{intDop}-1} \left\| x(i.N_{intDop} + l, j, t_n) \right\|^2$$

Avec :

i : indice sur l'axe Doppler
j : indice sur l'axe distance
n : indice sur l'axe temporel 110

La durée de l'intégration non cohérente peut être de 250 ms à 300 ms selon la forme d'onde utilisée.

Les valeurs numériques appliquées aux deux paramètres $N_{NC}$ et $N_{intDop}$ sont par exemple les suivantes
- $N_{NC}$ = 5 (soit 250 ms d'intégration non cohérente) ;
- $N_{intDopp}$ dépend de la forme d'onde courante et évolue conformément au tableau suivant :

| Forme d'onde | Nombre de cases d'intégration ($N_{intDop}$) dans l'axe Doppler | Résolution angulaire (fonction de $V_a$) [$\Delta_{cross}$ à 70m] | Nombre de cases Doppler de la carte de sortie |
|---|---|---|---|
| $FO_0$ | 10 | [2°,3°] [3m, 4m] | 26 |
| $FO_1$ | 8 | [1.8°, 2.7°] [2.2m, 3.2m] | 50 |
| $FO_2$ | 2 | [0.8°, 1.8°] [1m, 2m] | 102 |
| $FO_3$ | 1 | [0.9°, 4°] [1m, 5.4m] | 88 |

Dans un cas à très haute résolution correspondant à la dernière ligne de la première colonne, on obtient $N_{intDopp}$ = 1, car il n'y a pas de migration Doppler possible, la cible ne peut pas changer de filtre Doppler. Dans la première ligne de la troisième colonne, on obtient un nombre de cases Doppler égal à 26, lié à la résolution angulaire (ici entre 2° et 3°) et correspondant à la résolution. Un filtre correspond à une direction donnée. Dans ce cas, il y a 26 filtres d'intérêt pour une résolution angulaire comprise entre 2° et 3°.

A l'issue de ce traitement, on dispose d'une carte distance-Doppler 111 pour chaque direction de visée, correspondant à chaque faisceau formé.

Les étapes suivantes 52, 53, 54 consistent à détecter puis à caractériser les objets présents dans le domaine instrumenté, en distance, en vitesse et en position angulaire.

La première 52 de ces étapes consiste à détecter dans chacun des faisceaux formés, la présence d'une éventuelle cible. La détection s'effectue de façon classique, par comparaison de chaque pixel par rapport au bruit, complétée éventuellement par la validation d'un critère de contraste avec les pixels voisins ou de détections de contours sur les cartes distance Doppler 111 issues des traitements précédents. Cette opération est effectuée pour chaque faisceau formé.

L'estimation de la vitesse et la localisation des cibles utiles s'effectuent de façon classique selon les étapes suivantes :
Pour chaque pixel ayant donné lieu à détection, d'indices i, j, conformément à la figure 12.

- Estimation de la fréquence composite distance Doppler, $F_{dist}$ :
  Extraction de l'indice i du pixel ayant donné lieu à détection pour identifier la fréquence centrale de la cellule distance 121, et affinage de la mesure par estimation de contraste avec les pixels adjacents sur l'axe distance
- Estimation de la fréquence Doppler, $F_{dop}$ :
  Extraction de l'indice j du pixel ayant donné lieu à détection pour identifier la fréquence centrale de la cellule distance 121, et affinage de la mesure par estimation de contraste avec les pixels adjacents sur l'axe Doppler
- Estimation de la distance radiale $D_{rad}$ selon la relation (10) suvante :

$$Drad = (Fdist - Fdop)\frac{C\Delta Tm}{2\Delta Fm}$$

où :

- $\Delta T_m$ est la durée de la rampe de la forme d'onde d'indice m ;
- $\Delta F_m$ est la bande de modulation de la rampe d'indice m.

Dans l'exemple des quatre formes d'onde de la figure 4 qui seront détaillées en annexe, m varie de 0 à 4, avec :

- $\Delta T_0 = 96 \ \mu s$, $\Delta T_1 = 126 \ \mu s$, $\Delta T_2 = 178 \ \mu s$ et $\Delta T_3 = 388 \ \mu s$, et
- $\Delta F_0 = 50$ MHz, $\Delta F_1 = 65$ MHz, $\Delta F_m = 50$ MHz, $\Delta F_2 = 100$ MHz et $\Delta F_3 = 200$ MHz.

On recale ainsi les échos de distance radiale et on corrige le biais lié au Doppler, d'où le terme de fréquence composite liée à la distance et au Doppler.

Dans l'exemple de la figure 4, il y a quatre forme d'onde $FO_0$, $FO_1$, $FO_2$ et $FO_3$, m variant ici de 0 à 3.

• Estimation de l'angle d'azimut

Avantageusement, l'estimation de l'angle d'azimut s'effectue pour chaque pixel détecté en comparant le niveau reçu sur les cartes distance/Doppler de deux faisceaux formés adjacents, par exemple selon un opérateur connu de type monopulse d'amplitude.

L'étape de détection et de localisation 52 est par exemple suivie par une étape de pistage 53. Le pistage s'effectue par un traitement connu dans le repère 131 du radar. Les cibles sont pistées de façon à consolider les détections, à affiner leurs mesures de position et de vitesses obtenues, et à estimer leur trajectoires.

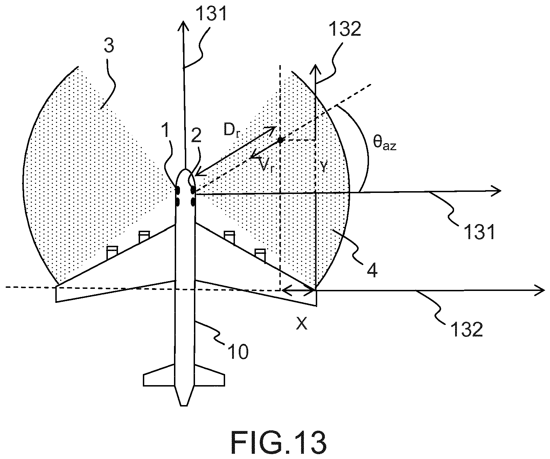

Dans une étape suivante 54 un changement de repère est effectué, passant du repère 131 lié au radar au repère 132 lié à l'extrémité de l'aile de l'avion comme l'illustre la figure 13. Ce changement de repère est effectué de façon à positionner les obstacles potentiels par rapport à l'extrémité de l'aile.

A ce stade, seules les détections en trajectoire de collision sont par exemple retenues. Les pistes positionnées dans ce nouveau repère peuvent ensuite être exploitées par le système d'anticollision pour être visualisées et/ou permettre la prise de décision de pré-alerte ou d'alerte d'urgence. L'invention a été décrite pour l'anticollision par rapport aux extrémités des ailes d'un avion au roulage. Elle s'applique également à toute autre partie de l'avions pourvue qu'elle soit en regard du radar.

Annexe

Cette annexe présente un exemple de guide de choix des formes d'onde de la figure 4.

Forme d'onde $FO_0$ : appliquée pour $V_a$ comprise entre 7.5 et 10 m/s

$\Delta F = 50$ MHz afin d'obtenir 3m de résolution ;
$\Delta F_{dopp} = 8$KHz en considérant l'ensemble du faisceau (100°) ;
$F_r = 1.3 \ \Delta F_{dopp} = 10.2$KHz ($T_r = 98\mu s$) pour respecter la contrainte $F_{rec} > \Delta F_{dopp}$ ; $\Delta T = T_r - 2\mu s = 96 \ \mu s$ ; temps de repos de stabilisation de boucle
$F_{ech} = 625$KHz ($T_{ech} = 1.6\mu s$), la fréquence d'échantillonnage maximum du radar ;
Dans ce cas, la distance d'ambiguïté est située à 90m.

Domaine vitesse à -3dB (100°) : -7.7m/s, 7.7m/s

$$\vartheta_{res} = 2 \, arcsin\left(\frac{\lambda}{4.T_{int}v_r.sin\theta_{sq}}\right),$$

Résolution angulaire : [0.22°, 029°] avec et $T_{int} = 50$ms Soit une résolution transverse à 70m de [0.27m, 0.35m]

Forme d'onde $FO_1$ : pour $V_a$ comprise entre 5 et 7.5 m/s

$\Delta F = 65$ MHz afin d'obtenir 2.3m de résolution ;
$\Delta F_{dopp} = 6$KHz en considérant l'ensemble du faisceau (100°);
$F_r = 1.3 \ \Delta_{dopp} = 7,6$ KHz ($T_r = 128 \ \mu s$) pour respecter la contrainte
$F_{rec} > \Delta F_{dopp}$ ;
$\Delta T = T_r - 2\mu s = 126 \ \mu s$ ; temps de repos de stabilisation de boucle ;
$F_{ech} = 625$KHz ($T_{ech} = 1.6\mu s$), la fréquence d'échantillonnage maximum du radar ;
Dans ce cas, la distance d'ambiguïté est située à 90m
Domaine vitesse à -3dB (100°) : -5.7m/s, 5.7m/s
Résolution angulaire : [0.29°, 0.44°]

Soit une résolution transverse à 70m de [0.35m, 0.53m]

Forme d'onde $FO_2$ : pour $V_a$ comprise entre 2.5 et 5 m/s

$\Delta F = 100$ MHz afin d'obtenir 1.5m de résolution ;
$\Delta F_{dopp} = 4$KHz en considérant l'ensemble du faisceau (100°);
$F_r = 1.3 \Delta F_{dopp} = 5.5$ KHz ($T_r = 180\mu s$) pour respecter la contrainte
$F_{rec} > \Delta F_{dopp}$ ;
$\Delta T = T_r - 2\mu s = 178$ $\mu s$ ; temps de repos de stabilisation de boucle ;
$F_{ech} = 625$KHz ($T_{ech} = 1.6\mu s$), la fréquence d'échantillonnage maximum du radar ;
Dans ce cas, la distance d'ambiguïté est située à 83 m.
Domaine vitesse à -3dB (100°) : -4.2, +4.2 m/s
Résolution angulaire : [0.4° , 0.9°]
Soit une résolution transverse à 70m de [0.5m, 1.1m]

Forme d'onde $FO_3$ : pour $V_a$ inférieure à 2.5 m/s

$\Delta F = 200$ MHz afin d'obtenir 0.75m de résolution ;
$\Delta F_{dopp} = 2$KHz en considérant l'ensemble du faisceau (100°);
$F_r = 1.3 \Delta F_{dopp} = 2.56$ KHz ($T_r = 195\mu s$) pour respecter la contrainte $F_{rec} > \Delta F_{dopp}$;
$\Delta T = T_r - 2\mu s = 388$ $\mu s$ ; temps de repos de stabilisation de boucle ;
$F_{ech} = 625$KHz ($T_{ech} = 1.6\mu s$), la fréquence d'échantillonnage maximum du radar ;
Dans ce cas, la distance d'ambiguïté est située à 90 m
Domaine vitesse à -3dB (100°) : -2, +2 m/s
Résolution angulaire : [0.90°, 5°]
Soit une résolution transverse à 70m de [1.1m, 6.1m]

**Revendications**

**1.**  Radar anticollision pour aéronef au roulage, **caractérisé en ce qu'**étant apte être fixé latéralement sur le corps d'un aéronef (10) et à réaliser la détection d'obstacles en trajectoire de collision avec une partie (5, 6) de l'aéronef en regard dudit radar (1, 2), il comporte au moins une voie antennaire d'émission (31) émettant une onde du type FMCW et plusieurs voies antennaires de réception (320, 321, 322, 323) disposées dans un même plan, la forme ($FO_0$, $FO_1$, $FO_2$ et $FO_3$) de ladite onde et le domaine de couverture angulaire dudit radar étant fonction de la vitesse de l'aéronef, les moyens de traitement dudit radar effectuant au moins les étapes suivantes :

- Etablissement (511) dans le repère du radar (1, 2) d'une première carte distance/Doppler (65) permettant de séparer les échos selon des cellules de résolution distance et Doppler sur lesdites plusieurs voies antennaires de réception ;
- Etablissement (512) d'une seconde carte distance/Doppler (81) de dimensions réduites par rapport à la première (65), en sélectionnant dans cette dernière un sous-ensemble de cellules de résolution distance et Doppler correspondant aux positions possibles de cibles susceptibles d'entrer en collision avec ladite partie (5, 6) l'aéronef, ladite sélection étant fonction de la vitesse de l'aéronef ;
- Etablissement (37) de nouvelles cartes distance/Doppler par formation de faisceau par le calcul sur les sous-ensembles de cellules de résolution distance retenues sur chaque voie antennaire de réception, de façon à séparer le faisceau d'observation angulaire dans le plan des voies antennaires en au moins deux faisceaux (101, 102, 103, 104, 105) conformément au principe d'affinage de lobe par filtrage Doppler selon un traitement d'antenne synthétique non focalisé ;
- Intégration temporelle (514), sur chaque faisceau formé, de plusieurs cartes distance/Doppler successives obtenues dans l'étape précédente (37) afin d'obtenir une carte distance/Doppler finale (111) pour chaque faisceau, la durée d'intégration étant fonction de la forme d'onde utilisée ;

ces étapes étant suivies au moins d'une étape (52) de détection dans chacun des faisceaux formés à partir de ladite carte distance/Doppler finale (111).

**2.**  Radar selon la revendication 1, **caractérisé en ce que** dans l'étape de détection (52), l'estimation de l'angle d'azimut de ladite cible est effectué, pour chaque pixel détecté dans la carte distance/Doppler finale (111), en comparant le niveau reçu sur les cartes distance/Doppler de deux faisceaux formés adjacents selon un opérateur de type monopulse d'amplitude.

3. Radar selon l'une quelconque des revendications précédentes, **caractérisé en ce que** l'étape de détection (52) est suivie d'une étape de pistage des cibles détectées dans le repère (131) dudit radar.

4. Radar selon l'une quelconque des revendications précédentes, **caractérisé en ce qu'**il effectue une étape (54) de changement de repère géographique, passant du repère (131) lié au radar à un repère (132) lié à ladite partie (5, 6) de l'aéronef (10), pour estimer les coordonnées des cibles dans le repère (132) lié à ladite partie.

5. Radar selon l'une quelconque des revendications précédentes, **caractérisé en ce que** le plan des voies antennaires de réception (320, 321, 322, 323) est horizontal.

6. Radar selon l'une quelconque des revendications précédentes, **caractérisé en ce que** la formation de faisceau est effectuée sur un domaine angulaire (3, 4) de +/- 45° dans le plan des voies antennaires, par rapport à un axe de visée (8, 9), apte à être perpendiculaire à l'axe du corps de l'aéronef (10).

7. Radar selon l'une quelconque des revendications précédentes, **caractérisé en ce que** les antennes des voies antennaires de réceptions (320, 321, 322, 323) sur lesquels est effectuée la formation de faisceaux par le calcul (37) sont espacées l'une de l'autre de plus d'une demie longueur d'onde, l'ambiguïté de position angulaire d'une cible étant levée par la fréquence Doppler de la cellule distance/Doppler de ladite cible.

8. Radar selon l'une quelconque des revendications précédentes, **caractérisé en ce que** la première carte distance/Doppler (65) est obtenue après compression en distance et compression en Doppler de ladite onde du type FMCW.

9. Radar selon l'une quelconque des revendications précédentes, **caractérisé en ce qu'**il comporte quatre voies antennaires de réception (320, 321, 322, 323).

10. Radar selon l'une quelconque des revendications précédentes, **caractérisé en ce que** ladite onde est dans le domaine millimétrique.

11. Radar selon la revendication 10, **caractérisé en ce que** ladite onde est dans la bande de fréquence 76 à 77 GHz.

12. Radar selon l'une quelconque des revendications précédentes, **caractérisé en ce que** ladite partie (5, 6) est une extrémité d'aile de l'aéronef.

13. Système anticollision pour avion au roulage, **caractérisé en ce qu'**il comporte au moins deux radars (1, 2) selon l'une quelconque des revendications précédentes, installés latéralement chacun d'un côté du corps de l'avion formant fuselage.

14. Système anticollision selon la revendication 13, caractérisé en ce chaque radar (1, 2) est installé en avant de l'aile.

15. Système anticollision selon la revendication 14, **caractérisé en ce que** chaque radar (1, 2) est fixé à l'emplacement d'un hublot au voisinage du cockpit.

**Patentansprüche**

1. Antikollisionsradar für ein rollendes Luftfahrzeug, **dadurch gekennzeichnet, dass** es, da es lateral am Körper eines Luftfahrzeugs (10) befestigt werden und Hindernisse auf Kollisionskurs mit einem Teil (5, 6) des Luftfahrzeugs gegenüber dem Radar (1, 2) erkennen kann, wenigstens einen Sendeantennenkanal (31), der eine Welle des FMCW-Typs emittiert, und mehrere Empfangsantennenkanäle (320, 321, 322, 323) umfasst, die in einer selben Ebene angeordnet sind, wobei die Form ($FO_0$, $FO_1$, $FO_2$ und $FO_3$) der Welle und der Winkelabdeckungsbereich des Radars von der Geschwindigkeit des Luftfahrzeugs abhängig sind, wobei die Verarbeitungsmittel des Radars wenigstens die folgenden Schritte durchführen:

- Einrichten (511), im Bezugspunkt des Radars (1, 2), einer ersten Distanz/Doppler-Karte (65), die es zulässt, die Echos in Distanz- und Doppler-Auflösungszellen auf den mehreren Empfangsantennenkanälen zu trennen;
- Einrichten (512) einer zweiten Distanz/Doppler-Karte (81) mit in Bezug auf die erste (65) geringeren Abmessungen, durch Wählen, in dieser Letzteren, eines Teilsatzes von Distanz- und Doppler-Auflösungszellen entsprechend den möglichen Zielpositionen, die mit dem Teil (5, 6) des Luftfahrzeugs kollidieren können, wobei die Auswahl von der Geschwindigkeit des Luftfahrzeugs abhängig ist;
- Einrichten (37) neuer Distanz/Doppler-Karten durch rechnerische Strahlenbildung an den Teilsätzen von Distanzauflösungszellen, die auf jedem Empfangsantennenkanal behalten werden, um den Winkelbeobachtungsstrahl in der Ebene der Antennenkanäle in wenigstens zwei Strahlen (101, 102, 103, 104, 105) entsprechend dem Keulenverfeinerungsprinzip durch Doppler-Filterung unter Verwendung einer synthetischen nicht fokalisierten Antennenbearbeitung zu trennen;
- zeitliches Integrieren (514), auf jedem gebildeten Strahl, von mehreren im vorherigen Schritt (37) erhaltenen aufeinander folgenden Distanz/Doppler-Karten, um eine letzte Distanz/Doppler-Karte (111) für jeden Strahl zu erhalten, wobei die Integrationsdauer von der benutzten Wellenform abhängig ist;

wobei auf diese Schritte wenigstens ein Erkennungsschritt (52) in jedem der gebildeten Strahlen auf der Basis der letzten Distanz/Doppler-Karte (111) folgt.

2. Radar nach Anspruch 1, **dadurch gekennzeichnet, dass** in dem Erkennungsschritt (52) der Azimutwinkel des Ziels geschätzt wird, für jedes in der letzten Distanz/Doppler-Karte (111) erkannte Pixel, durch Vergleichen des empfangenen Pegels auf den Distanz/Doppler-Karten von zwei benachbarten gebildeten Strahlen unter Verwendung eines Operators des Amplitudenmonopulstyps.

3. Radar nach einem der vorherigen Ansprüche, **dadurch gekennzeichnet, dass** auf den Erkennungsschritt (52) ein Schritt des Verfolgens von im Bezugspunkt (131) des Radars erkannten Zielen folgt.

4. Radar nach einem der vorherigen Ansprüche, **dadurch gekennzeichnet, dass** es einen Schritt (54) des Wechselns des geografischen Bezugspunkts durchführt, der von dem mit dem Radar verbundenen Bezugspunkt (131) zu einem Bezugspunkt (132) übergeht, der mit dem Teil (5, 6) des Luftfahrzeugs (10) verbunden ist, zum Schätzen der Koordinaten der Ziele in dem mit dem Teil verbundenen Bezugspunkt (132).

5. Radar nach einem der vorherigen Ansprüche, **dadurch gekennzeichnet, dass** die Ebene der Empfangsantennenkanäle (320, 321, 322, 323) horizontal ist.

6. Radar nach einem der vorherigen Ansprüche, **dadurch gekennzeichnet, dass** die Strahlenbildung in einem Winkelbereich (3, 4) von +/- 45° in der Ebene der Antennenkanäle in Bezug auf eine Sichtachse (8, 9) erfolgt, die lotrecht zur Achse des Körpers des Luftfahrzeugs (10) sein kann.

7. Radar nach einem der vorherigen Ansprüche, **dadurch gekennzeichnet, dass** die Antennen der Empfangsantennenkanäle (320, 321, 322, 323), auf denen die rechnerische Strahlenbildung (37) erfolgt, um mehr als eine halbe Wellenlänge voneinander beabstandet sind, wobei die winkelmäßige Positionsambiguität eines Ziels durch die Doppler-Frequenz der Distanz/Doppler-Zelle des Ziels entfernt wird.

8. Radar nach einem der vorherigen Ansprüche, **dadurch gekennzeichnet, dass** die erste Distanz/Doppler-Karte (65) nach Distanzkompression und Doppler-Kompression der Welle des FMCW-Typs erhalten wird.

9. Radar nach einem der vorherigen Ansprüche, **dadurch gekennzeichnet, dass** es vier Empfangsantennenkanäle (320, 321, 322, 323) umfasst.

10. Radar nach einem der vorherigen Ansprüche, **dadurch gekennzeichnet, dass** die Welle im Millimeterbereich ist.

11. Radar nach Anspruch 10, **dadurch gekennzeichnet, dass** die Welle im Frequenzband von 76 bis 77 GHz ist.

12. Radar nach einem der vorherigen Ansprüche, **dadurch gekennzeichnet, dass** der Teil (5, 6) eine Flügelspitze des Luftfahrzeugs ist.

13. Antikollisionssystem für ein rollendes Luftfahrzeug, **dadurch gekennzeichnet, dass** es wenigstens zwei Radare (1, 2) nach einem der vorherigen Ansprüche umfasst, jeweils lateral auf einer Seite des Körpers des den Rumpf bildenden Luftfahrzeugs installiert.

**14.** Antikollisionssystem nach Anspruch 13, **dadurch gekennzeichnet, dass** jedes Radar (1, 2) vor dem Flügel installiert ist.

**15.** Antikollisionssystem nach Anspruch 14, **dadurch gekennzeichnet, dass** jedes Radar (1, 2) am Ort eines Bullauges in der Nähe des Cockpits befestigt ist.

**Claims**

**1.** An anti-collision radar for a taxiing aircraft, **characterized in that**, being able to be attached laterally to the body of an aircraft (10) and to detect obstacles on a collision course with a portion (5, 6) of the aircraft facing said radar (1, 2), it includes at least one emission antennal channel (31) emitting a wave of the FMCW type and a plurality of reception antennal channels (320, 321, 322, 323) placed in the same plane, the form ($FO_0$, $FO_1$, $FO_2$ and $FO_3$) of said wave and the field of angular coverage of said radar depending on the velocity of the aircraft, the processing means of said radar carrying out at least the following steps:

- establishing (511), in the coordinate system of the radar (1, 2), a first distance/Doppler map (65) allowing echoes to be separated into distance and Doppler resolution cells in said plurality of reception antennal channels;
- establishing (512) a second distance/Doppler map (81) smaller than the first map (65) by selecting from the latter a subset of distance and Doppler resolution cells that corresponds to the possible positions of targets liable to collide with said portion (5, 6) of the aircraft, said selection depending on the velocity of the aircraft;
- Establishing (37) new distance/Doppler maps by forming beams computationally from the subsets of those distance resolution cells that are retained for each reception antennal channel, so as to separate the beam of angular observation in the plane of the antennal channels into at least two beams (101, 102, 103, 104, 105) in conformity with the principle of lobe sharpening by Doppler filtering in unfocused synthetic antenna processing;
- temporally integrating (514), in each formed beam, a plurality of successive distance/Doppler maps obtained in the preceding step (37) in order to obtain a final distance/Doppler map (111) for each beam, the integration duration depending on the waveform used;

these steps being followed by at least one detection step (52) in each of the beams formed on the basis of said final distance/Doppler map (111).

**2.** The radar as claimed in claim 1, **characterized in that**, in the detecting step (52), the azimuth angle of said target is estimated, for each detected pixel in the final distance/Doppler map (111), by comparing the received level in the distance/Doppler maps of two adjacent formed beams using an amplitude monopulse type operator.

**3.** The radar as claimed in any one of the preceding claims, **characterized in that** the detection step (52) is followed by a step of tracking detected targets in the coordinate system (131) of said radar.

**4.** The radar as claimed in any one of the preceding claims, **characterized in that** it performs a step (54) of changing the locational coordinate system, passing from the coordinate system (131) associated with the radar to a coordinate system (132) associated with said portion (5, 6) of the aircraft (10), in order to estimate the coordinates of the targets in the coordinate system (132) associated with said portion.

**5.** The radar as claimed in any one of the preceding claims, **characterized in that** the plane of the reception antennal channels (320, 321, 322, 323) is horizontal.

**6.** The radar as claimed in any one of the preceding claims, **characterized in that** the beam formation is carried out in an angular field (3, 4) of +/- 45° in the plane of the antennal channels, relative to a sighting axis (8, 9) able to be perpendicular to the axis of the body of the aircraft (10).

**7.** The radar as claimed in any one of the preceding claims, **characterized in that** the antennae of the reception antennal channels (320, 321, 322, 323) on which the beam forming (37) is carried out computationally are spaced apart from one another by more than half wavelength, the ambiguity in the angular position of a target being removed by the Doppler frequency of the distance/Doppler cell of said target.

**8.** The radar as claimed in any one of the preceding claims, **characterized in that** the first distance/Doppler map (65) is obtained after distance compressing and Doppler compressing said wave of the FMCW type.

9. The radar as claimed in any one of the preceding claims, **characterized in that** it includes four reception antennal channels (320, 321, 322, 323).

10. The radar as claimed in any one of the preceding claims, **characterized in that** said wave is in the millimeter domain.

11. The radar as claimed in claim 10, **characterized in that** said wave is in the frequency band 76 to 77 GHz.

12. The radar as claimed in any one of the preceding claims, **characterized in that** said portion (5, 6) is a wingtip of the aircraft.

13. An anti-collision system for a taxiing airplane, **characterized in that** it includes at least two radars (1, 2) as claimed in any one of the preceding claims, each installed laterally on one side of the body of the airplane forming its fuselage.

14. The anti-collision system as claimed in claim 13, **characterized in that** each radar (1, 2) is installed in front of the wing.

15. The anti-collision system as claimed in claim 14, **characterized in that** each radar (1, 2) is attached in the location of a porthole in the vicinity of the cockpit.

FIG.1

FIG.2

FIG.3

FIG.4

Vitesse avion

320
Voie antennaire 0

321
Voie antennaire 1

322
Voie antennaire 2

323
Voie antennaire 3

511

Compression Distance/ Doppler

511

Compression Distance/ Doppler

511

Compression Distance/ Doppler

511

Compression Distance/ Doppler

512

Sélection Zone Distance/Doppler

512

Sélection Zone Distance/Doppler

512

Sélection Zone Distance/Doppler

512

Sélection Zone Distance/Doppler

37

Formation de Faisceaux

Theta0
514

Theta1
514

Theta2
514

Theta3
514

Intégration Carte Distance/Doppler

Intégration Carte Distance/Doppler

Intégration Carte Distance/Doppler

Intégration Carte Distance/Doppler

51

Détection/Estimation

52

Pistage

53

Passage dans le repère « WingTip »

54

FIG.5

FIG.6

FIG.7

Axe distance (N_dist)

Axe doppler (N_dopp)

Axe doppler (N_doppSel)

Axe distance (N_DistSel)

FIG.8

Fauchée minimum : 30 m

$V_a$ = 10 m/sec

30°

91

Limite supérieure minimum du domaine de détection : 75 m

Limite inférieure minimum du domaine de détection : 55 m

30 m

20 m

3

1

2

8

10

4

FIG.9a

3

$V_a$=2,5m/sec

20 m

4

92

1

2

8

30 m

34°

Limite inférieure minimum du domaine de détection : 10 m

Limite supérieure minimum du domaine de détection : 20 m

5°

10

Fauchée minimum : 26 m

FIG.9b

FIG.10a

FIG.10b

110

$t_0$       $t_1$       $t_2$       temps

Axe doppler (i)       Axe doppler (i)

Axe doppler (i)

81       Axe distance (j)

81       Axe distance (j)

81       Axe distance (j)

Axe doppler (i)

Axe distance (j)

111

$$x_{out}(i,j) = \sum_{n=0}^{N_{nc}-1} \sum_{l=0}^{N_{intDop}-1} \left\| x(i.N_{intDop}+l,j,t_n) \right\|^2$$

## FIG.11

Axe doppler
(indice i)       121       111

Axe doppler
(indice j)

Fdopmin →

Fdistmin

j

## FIG.12

FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0701927

- EP 0863409 A